# EUROPÄISCHE PATENTSCHRIFT

(11) **EP 2 248 411 B1**
(45) Veröffentlichungstag und Bekanntmachung des Hinweises auf die Patenterteilung: **18.12.2019**
(21) Anmeldenummer: 10008624.8
(22) Anmeldetag: 22.02.2008
(51) Int. Cl.: A01D 90/02, A01D 90/14

(54) **Erntemaschine**
Harvester
Moissonneuse

(30) Priorität: 18.04.2007 DE 102007018321
(43) Veröffentlichungstag der Anmeldung: 10.11.2010
(62) Teilanmeldung aus: 08003304.6
(73) Patentinhaber: PÖTTINGER Landtechnik GmbH, 4710 Grieskirchen (AT)
(72) Erfinder: Aumayr, Klaus, Dipl.-Ing., 4612 Scharten (AT); Baldinger, Friedrich, Ing., 4600 Wels (AT); Edlbauer, Karl, Ing., 4710 Tollet (AT); Menzl, Herbert, Ing., 4600 Wels (AT); Baldinger, Markus, Dr. Dipl.-Ing., 4084 St. Agatha (AT)
(74) Vertreter: Thoma, Michael

(56) Entgegenhaltungen:
- EP-A- 1 609 351
- EP-A1- 0 958 729
- EP-A2- 1 153 538
- WO-A-94/24845
- CA-A- 960 873
- DE-A1- 10 253 081

## Beschreibung

Die vorliegende Erfindung betrifft eine Erntemaschine, insbesondere einen Ladewagen, mit einer Aufnahmevorrichtung zur Aufnahme von Erntegut, die einen Aufsammelförderer, vorzugsweise in Form einer anheb- und absenkbaren Pick-up umfassend eine rotatorisch antreibbare Stachelwalze, zum Aufsammeln des Ernteguts vom Boden, sowie einen dem Aufsammelförderer nachgeschalteten Beschickungsförderer, vorzugsweise in Form eines Förderrotors, zur Förderung des aufgesammelten Ernteguts durch einen Förderkanal in einen Erntegutraum aufweist, sowie ferner mit Erfassungsmitteln zur Erfassung von Betriebs- und/oder Bearbeitungsparametern sowie einer Steuervorrichtung zur Ausgabe von Steuersignalen für die Erntemaschine, wobei das Verhältnis der Aufsammelförderer-Antriebsgeschwindigkeit zur Beschickungsförderer-Antriebsgeschwindigkeit variierbar ist.

Für Erntemaschinen, die einen Schwad von Erntegut vom Boden aufnehmen, wurden bereits mannigfache Steuerungen vorgeschlagen, die in Abhängigkeit diverser Betriebs- bzw. Erntegutparameter die Fahrgeschwindigkeit, die Lenkung oder den Betrieb des Aufnahmeaggregats steuern. Ziel ist regelmäßig, eine hohe Aufnahmeleistung und gleichzeitig eine gleichmäßige Beladung zu erreichen. So schlägt z. B. die DE 102 53 081 A1 einen Feldhäcksler vor, dessen Steuerung neben der Erntegutmenge die Belastung des Fahrantriebs berücksichtigt, um z. B. bei Steigungen die Leistungsreserven des Motors nicht zu erschöpfen und ein Abwürgen des Antriebs zu verhindern. Registriert die Sensorik z. B. einerseits einen Anstieg der Erntegutmenge und andererseits gleichzeitig einen Anstieg der Fahrantriebsbelastung durch eine Bergauffahrt, wird die Fahrgeschwindigkeit gedrosselt. Die EP 1 153 538 A2 beschreibt eine Ballenpresse mit einer automatischen Regelung des Erntegutdurchsatzes. Stellvertretend für den Erntegutdurchsatz wird die Pressenantriebsbelastung erfasst. Weicht diese von einem Soll-Wert um ein vorgegebenes Maß ab, verändert die Steuerung die Fahrgeschwindigkeit des die Ballenpresse ziehenden Schleppers.

Die DE 34 34 825 A1 beschreibt es weiterhin, eine von einem Schlepper gezogene Landmaschine in Abhängigkeit des erfassten Zapfwellendrehmoments zu steuern, wobei das Zapfwellendrehmoment mittels eines Wirbelstromsensors gemessen wird. Die DE 101 29 133 A1 lehrt es weiterhin, einen Mähdrescher automatisch zu lenken. Hierzu wird mittels Positionssensoren die Lage der Erntegutkante oder des aufzunehmenden Schwades erfasst. Weiterhin beschreibt die DE 195 28 663 A1 ein Verfahren zur Steuerung eines Mähdreschers, bei dem ein abzuerntendes Feld zunächst kartographisch hinsichtlich des Erntegutertrags erfasst und sodann die Fahrgeschwindigkeit des Mähdreschers beim Abernten des Feldes in Abhängigkeit der positionsbezogen bestimmten Ertragswerte gesteuert wird. Die DE 44 11 646 beschreibt eine Erntemaschine, bei der mittels einer Videokamera das Höhenprofil des Getreidebestandes vor dem Schneidwerk der Erntemaschine bestimmt wird. In Abhängigkeit der erhaltenen Daten wird eine Steuerung der Schneidwerkeinstellungen durchgeführt.

Die DE 10 2005 005 556 schlägt weiterhin vor, für die Steuerung der Erntemaschine sowohl die durch den bereits aufgenommenen Schwad induzierte Belastung der Erntemaschine als auch erst die zukünftig kommende Belastung zu berücksichtigen. Einerseits wird mittels eines Schwadsensors der vor der Erntemaschine liegende Erntegutschwad erfasst, während andererseits an der Erntemaschine mittels entsprechender Sensoren die Leistungsaufnahme des Aufnahmeaggregats und der sich im Laderaum der Erntemaschine aufbauende Erntegutdruck erfasst werden, so dass die Steuerung in Abhängigkeit beider Parametergruppen die Schlepperzapfwellendrehzahl und damit die Antriebsgeschwindigkeit des Aufnahmeaggregats und eine Kratzbodengeschwindigkeit entsprechend steuern kann.

Weiterhin beschreibt die EP 16 09 351 einen Erntevorsatz für eine Erntemaschine mit einem Aufnahmeförderer, dem ein Abgabeförderer nachgeordnet ist, dem wiederum ein Einzugsförderer nachgeordnet ist. Die Geschwindigkeit des letztgenannten Einzugsförderers ist unabhängig von der Geschwindigkeit des Aufnahmeförderers steuerbar. Die Geschwindigkeit des mittleren Abgabeförderers wird zwischen den Geschwindigkeiten des Aufnahmeförderers und des Einzugsförderers gehalten.

Trotz dieser mannigfachen Bemühungen ist es bislang noch nicht gelungen, Erntemaschinen tatsächlich so zu steuern, dass eine optimale Beladung erreicht und Störungen der Erntegutaufnahme durch Schoppern oder dergleichen verhindert werden. Dabei leidet bislang oftmals zumindest eine der beiden bisweilen auseinanderlaufenden Anforderungen Rechqualität und Schnittqualität. Letztere leidet oftmals daran, dass die in das Schneidwerk geförderten Futterpakete in der Größe variieren.

Der vorliegenden Erfindung liegt hiervon ausgehend, die Aufgabe zugrunde, eine verbesserte Erntemaschine der genannten Art zu schaffen, die Nachteile des Standes der Technik vermeidet und letzteren in vorteilhafter Weise weiterbildet. Insbesondere soll bei möglichst hoher Aufnahmeleistung der Erntemaschine eine optimale Rechqualität erreicht werden, ohne hinsichtlich der Schnittqualität des Ernteguts Abstriche in Kauf nehmen zu müssen.

Erfindungsgemäß wird diese Aufgabe durch eine Erntemaschine gemäß Anspruch 1 gelöst. Bevorzugte Ausgestaltungen der Erfindung sind Gegenstand der abhängigen Ansprüche.

Von der vorliegenden Erfindung wird der bislang beschrittene Weg verlassen, die beiden Teile der Aufnahmevorrichtung, nämlich den Aufsammelförderer und den diesem nachgeschalteten Beschickungsförderer, steuerungstechnisch als eine Einheit zu betrachten und sozusagen nur im Tandem zu steuern dahingehend, dass mit einer Drehzahlerhöhung der Pick-up auch die Drehzahl des nachgeschalteten Förderrotors erhöht wird und umgekehrt. Stattdessen werden nunmehr der Aufsammelförderer und der Beschickungsförderer steuerungstechnisch separat betrachtet und jeweils individuell gesteuert bzw. geregelt, um auf verschiedene Erntegutaufnahmesituationen differenziert reagieren und die auseinanderlaufenden Anforderungen bei der Futtergutaufnahme gleichermaßen erfüllen zu können. Erfindungsgemäß zeichnet sich die Erntemaschine dadurch aus, dass der Aufsammelförderer und der Beschickungsförderer unabhängig voneinander durch die Steuervorrichtung ansteuerbar sind derart, dass das Verhältnis der Aufsammelförderer-Antriebsgeschwindigkeit zur Beschickungsförderer-Antriebsgeschwindigkeit je nach Veränderung der erfassten Betriebs- und/oder Bearbeitungsparameter, die der Steuerung der Aufnahmevorrichtung zugrunde gelegt werden, durch die Steuervorrichtung variiert wird. Je nach Situation kann also beispielsweise die Antriebsgeschwindigkeit des Aufsammelförderers stärker erhöht werden als die Antriebsgeschwindigkeit des Beschickungsförderers bzw. kann die Antriebsgeschwindigkeit des Aufsammelförderers ggf. auch ohne Erhöhung der Antriebsgeschwindigkeit des Beschickungsförderers erhöht werden. Ebenso kann beispielsweise umgekehrt die Antriebsgeschwindigkeit des Beschickungsförderers erniedrigt oder erhöht werden, ohne dass eine entsprechende Erniedrigung bzw. Erhöhung der Antriebsgeschwindigkeit des Aufsammelförderers vorgenommen wird. Die beiden Komponenten der Aufnahmevorrichtung werden individuell variiert, um je nach auftretender Situation den Lade- bzw. Aufnahmevorgang zu optimieren, wobei es sich versteht, dass ggf. auch bei entsprechender Veränderung der Betriebs- bzw. Bearbeitungsparameter auch eine gemeinsame Veränderung der Antriebsgeschwindigkeiten der Aufsammel- und Beschickungsförderer erfolgen kann.

In Weiterbildung der Erfindung erfolgt dabei die Steuerung der Antriebsgeschwindigkeit des Aufsammelförderers anhand eines anderen Betriebs- bzw. Bearbeitungsparameters als die Steuerung der Antriebsgeschwindigkeit des Beschickungsförderers. Die individuelle Steuerung der Antriebsgeschwindigkeiten von Aufsammelförderer und Beschickungsförderer schließt also die Berücksichtigung jeweils individueller Betriebs- bzw. Bearbeitungsparameter ein.

Insbesondere kann hierbei vorgesehen sein, dass die Beschickungsförderer-Antriebsgeschwindigkeit von der Steuereinrichtung in Abhängigkeit des jeweils bestimmten Antriebsmoments des Aufsammelförderers variabel gesteuert wird. Dies kann insbesondere dergestalt erfolgen, dass mit zunehmendem Antriebsmoment und/oder mit zunehmender Belastung des Aufsammelförderers die Antriebsgeschwindigkeit des Beschickungsförderers erhöht wird bzw. dass umgekehrt mit abnehmendem Antriebsmoment des Aufsammelförderers die Antriebsgeschwindigkeit des Beschickungsförderers erniedrigt wird. Diese bevorzugte Ausgestaltung der Erfindung geht dabei von der Überlegung aus, dass das Antriebsmoment des Aufsammelförderers ein Maß für das Schwadgewicht des vom Aufsammelförderer aufgenommenen Erntegutschwads bzw. des vom Aufsammelförderer aufgenommenen Erntegut-Volumenstroms ist und dementsprechend die Antriebsgeschwindigkeit des Beschickungsförderers individuell an den von ihm zu verarbeitenden Erntegutvolumenstrom bzw. das zu verarbeitende Schwadgewicht angepasst werden kann, wenn die Antriebsdrehzahl des Beschickungsförderers in Abhängigkeit des jeweils erfassten bzw. anderweitig bestimmten Antriebsdrehmoment des Aufsammelförderers variabel gesteuert wird. Alternativ oder zusätzlich könnte mittels einer geeigneten Sensorik auch das Schwadgewicht bzw. der Volumenstrom des vom Aufsammelförderer aufgenommenen Erntegutschwads direkt bestimmt werden und die Antriebsgeschwindigkeit des nachgeschalteten Beschickungsförderers dann in Abhängigkeit dieser sensorisch erfassten Größe variabel gesteuert werden. Bevorzugt ist jedoch die vorgenannte indirekte Bestimmung des Schwadgewichts durch Erfassung bzw. anderweitige Bestimmung des Antriebsdrehmoments des Aufsammelförderers. In Weiterbildung der Erfindung können über die Berücksichtigung des Antriebsmoments des Aufsammelförderers hinaus noch weitere Betriebs- bzw. Bearbeitungsparameter für die variable Steuerung der Antriebsgeschwindigkeit des Beschickungsförderers zugrunde gelegt werden, so insbesondere auch die Antriebsgeschwindigkeit des Aufsammelförderers und/oder die Fahrgeschwindigkeit der Erntemaschine.

Weiterhin kann nach einer vorteilhaften Ausführung der Erfindung die Beschickungsförderer-Antriebsgeschwindigkeit von der Steuereinrichtung zusätzlich auch in Abhängigkeit der Füllhöhe und/oder der Ladehöhe des Ernteguts im Erntegutraum und/oder in Abhängigkeit eines Rückstaudrucks im Erntegutraum gesteuert sein.

In Weiterbildung der Erfindung wird dabei die Antriebsgeschwindigkeit des Beschickungsförderers nur innerhalb vorbestimmter Grenzen variiert. Insbesondere kann die Berücksichtigung des Antriebsmoments des Aufsammelförderers sozusagen gedeckelt sein dahingehend, dass eine Maximalgeschwindigkeit des Beschickungsförderers nicht überschritten wird.

Im Gegensatz zur Steuerung der Beschickungsförderer-Antriebsgeschwindigkeit in Abhängigkeit des Antriebsmoments des Aufsammelförderers wird in Weiterbildung der Erfindung die Antriebsgeschwindigkeit des Aufsammelförderers in Abhängigkeit der Fahrgeschwindigkeit der Erntemaschine variabel gesteuert, insbesondere derart, dass mit zunehmender Fahrgeschwindigkeit die Aufsammelförderer-Antriebsgeschwindigkeit erhöht und mit abnehmender Fahrgeschwindigkeit die Aufsammelförderer-Antriebsgeschwindigkeit abgesenkt wird.

Vorteilhafterweise wird dabei die Antriebsgeschwindigkeit des Aufsammelförderers nur innerhalb bestimmter Grenzen variiert. Insbesondere kann die Steuerung der Aufsammelförderer-Antriebsgeschwindigkeit in Abhängigkeit der Fahrgeschwindigkeit der Erntemaschine dahingehend begrenzt sein, dass die Aufsammelförderer-Antriebsgeschwindigkeit stets kleiner als eine vorgegebene Maximalgeschwindigkeit gehalten wird. Insbesondere wird dabei die Aufsammelförderer-Antriebsgeschwindigkeit stets kleiner gehalten als die Antriebsgeschwindigkeit, oberhalb derer ein sogenanntes Spritzen des Ernteguts auftritt, d.h. das Erntegut nicht mehr sauber in den anschließenden Förderkanal gefördert, sondern nach vorne/oben weggespritzt wird. Diese sogenannte Spritzgeschwindigkeit kann futtergutabhängig und/oder bodenbeschaffenheitsabhängig variieren. Der entsprechende Maximalwert der Aufsammelförderer-Antriebsgeschwindigkeit kann dementsprechend in Abhängigkeit dieser Parameter variabel festgelegt werden, beispielsweise durch Auswahl aus einer vorab gespeicherten Mehrzahl von Maximalwerten, die in Abhängigkeit sensorisch erfasster Werte für die genannte Erntegut- und/oder Bodenbeschaffenheit erfolgen kann.

Alternativ oder zusätzlich kann der Bereich, in dem die Aufsammelförderer-Antriebsgeschwindigkeit variiert werden kann, auch nach unten hin begrenzt sein. So kann vorgesehen sein, dass die Aufsammelförderer-Antriebsgeschwindigkeit stets größer gehalten wird als eine fahrgeschwindigkeitsabhängige Minimalgeschwindigkeit, die derart bemessen sein kann, dass der aufzunehmende Erntegutschwad vollständig aufgesammelt und ein Stau am Aufsammelförderer vermieden werden kann.

Erfindungsgemäß ist weiterhin vorgesehen, dass von der Steuervorrichtung ein Fahrgeschwindigkeits-Sollwertsignal in Abhängigkeit eines jeweils bestimmten Antriebsmoments des Aufsammelförderers variabel vorgegeben wird. Dieses Fahrgeschwindigkeits-Sollwertsignal kann in einer einfachen Ausführung der Erfindung auf einer im Blickfeld des Maschinenführers befindlichen Anzeigevorrichtung visuell oder auch akustisch ausgegeben werden, so dass dem Maschinenführer sozusagen an die Hand gegeben wird, wie schnell er fahren soll. Gemäß einer höher entwickelten, vorteilhaften Ausführung der Erfindung kann anhand des von der Steuervorrichtung bereitgestellten Fahrgeschwindigkeits-Sollwertsignals auch eine automatische Steuerung der Fahrgeschwindigkeit der Erntemaschine vorgenommen werden, insbesondere dann, wenn an dem die Erntemaschine ziehenden Schlepper ein entsprechender Fahrgeschwindigkeitsregler vorhanden ist. Es versteht sich, dass hierbei die Fahrgeschwindigkeitsregelung innerhalb vorbestimmter Grenzen erfolgt, insbesondere nach oben hin gedeckelt ist, damit keine übermäßige, ein Gefährdungspotential begründende Geschwindigkeit zugelassen wird.

In Weiterbildung der Erfindung kann dabei vorgesehen sein, dass das Fahrgeschwindigkeits-Sollwertsignal von der Steuereinrichtung solange erhöht wird, bis die Antriebsgeschwindigkeit des Aufsammelförderers und/oder das Antriebsmoment des Beschickungsförderers einen jeweiligen Maximalwert erreichen. Eine derartige Fahrgeschwindigkeitsregelung zielt auf eine maximale Erntegutaufnahmeleistung ab.

Erfindungsgemäß wird in einem entsprechenden Steuerungsmodus das Fahrgeschwindigkeits-Sollwertsignal von der Steuervorrichtung derart geregelt, dass die Antriebsgeschwindigkeit und/oder das Antriebsmoment des Beschickungsförderers einen vorbestimmten Sollwert erreicht. Eine derartige Steuerung bzw. Regelung geht von der Überlegung aus, dass eine optimale Schnittqualität eine konstante, bestimmte Größe der Futterpakete erfordert, welche sich in einem entsprechenden Antriebsmoment des Beschickungsförderers niederschlägt, so dass durch Einregelung des Antriebsmoments des Beschickungsförderers auf einen gewünschten Wert durch entsprechende Steuerung der das Antriebsmoment des Beschickungsförderers beeinflussenden Größen ein optimales Schnittergebnis erreicht wird.

Alternativ oder zusätzlich kann das Fahrgeschwindigkeits-Sollwertsignal von der Steuereinrichtung auch derart geregelt werden, dass das Antriebsmoment des Aufsammelförderers einen Sollwert erreicht. Da in der vorgenannten Weise für ein optimales Schnittergebnis die Futterpakete eine möglichst gleiche Größe haben sollen und selbst wiederum ein gleichmäßiges Schwadgewicht bzw. einen gleichmäßigen Schwad-Volumenstrom erfordern, kann ein optimales Schnittergebnis auch dadurch erreicht werden, dass das Aufsammelförderer-Antriebsmoment auf einen gewünschten Wert geregelt wird, indem die dieses Antriebsmoment beeinflussenden Größen entsprechend variiert werden.

Die Erfindung wird nachfolgend anhand eines bevorzugten Ausführungsbeispiels und einer zugehörigen Zeichnung näher erläutert. In der Zeichnung zeigt:

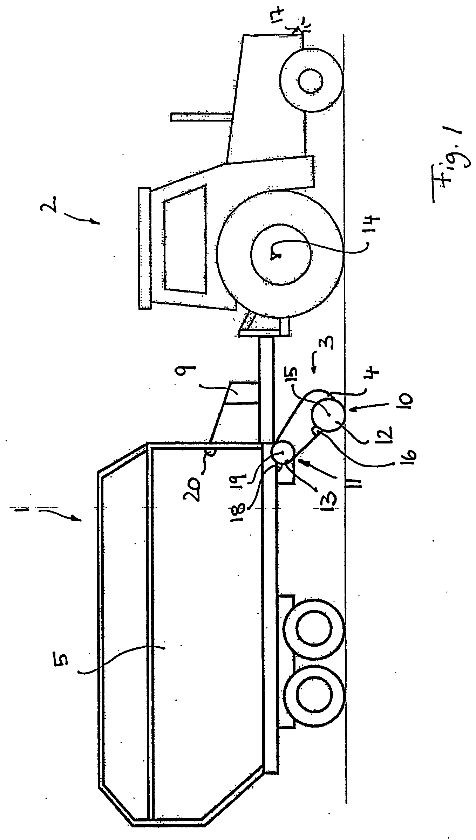

- Fig. 1:: eine schematische Seitenansicht eines von einem Schlepper gezogenen Ladewagens mit einer Vorrichtung zur Steuerung des Ladewagens nach einer bevorzugten Ausführung der Erfindung.

Der in Figur 1 gezeigte Ladewagen 1 wird in an sich bekannter Weise von einem Schlepper 2 gezogen und besitzt eine Erntegut-Aufnahmevorrichtung 3, die in der gezeichneten Ausführung einen Aufsammelförderer 10 zum Aufsammeln des Ernteguts vom Boden sowie einen nachgeschalteten Beschickungsförderer 11 aufweist, der das vom Aufsammelförderer 10 aufgesammelte Erntegut durch einen Förderkanal in den Laderaum 5 des Ladewagens 1 fördert.

Der Aufsammelförderer 10 ist dabei in der gezeichneten Ausführungsform als Pick-up 4 ausgebildet, die anhebbar und absenkbar ist und eine rotatorisch angetriebene Stachelwalze 12 aufweist. Der Beschickungsförderer 11 weist vorteilhafterweise einen Förderrotor 13 auf, der in den genannten Förderkanal reichende Förderzinken aufweist. Vorteilhafterweise ist dabei dem Förderrotor 13 in an sich bekannter Weise ein Schneidwerk zugeordnet, durch das durch den Förderkanal gefördertes Erntegut geschnitten werden kann.

Die Aufnahmevorrichtung 3 des Ladewagens 1 kann dabei vom Schlepper 2 her mit Antriebsenergie versorgt werden, wobei die Antriebe des Aufsammelförderers 10 und des Beschickungsförderers 11 hydraulisch ausgebildet sein und/oder einen Hydromotor aufweisen können, so dass eine individuelle Steuerung der Antriebsgeschwindigkeiten der beiden Förderer in einfacher Weise möglich ist. Dabei kann die Hydraulikversorgung unmittelbar vom Schlepper 2 her erfolgen. Es kann alternativ jedoch auch vorgesehen sein, dass eine am Ladewagen 1 vorgesehene Hydraulikpumpe mittels einer Zapfwelle vom Schlepper 2 her angetrieben wird. Weiterhin können ggf. auch andere Antriebsprinzipien beim Antrieb des Aufsammelförderers 10 und/oder beim Antrieb des Beschickungsförderers 11 verwirklicht sein.

In dem Laderaum 5 ist weiterhin ein Bodenförderer beispielsweise in Form eines Kratzbodens vorgesehen, mittels dessen das in den Laderaum 5 geförderte Erntegut von der Mündung des Beschickungsförderers weg gefördert werden kann.

Der Aufsammelförderer 10 sowie der Beschickungsförderer 11 werden jeweils individuell von einer Steuervorrichtung 9 gesteuert, die mit diversen Erfassungseinrichtungen bzw. Sensoren verbunden ist, mittels derer diverse Betriebs- bzw. Bearbeitungsparameter erfasst werden. Diese Sensoren umfassen insbesondere einen Fahrgeschwindigkeitssensor 14, einen Antriebsgeschwindigkeits- bzw. Drehzahlsensor 15 zur Erfassung der Antriebsgeschwindigkeit bzw. Drehzahl der Stachelwalze des Aufsammelförderers 10, einen dem Antrieb des Aufsammelförderers 10 zugeordneten Drehmomentsensor 16 beispielsweise in Form eines in den Hydraulikkreis geschalteten Drucksensors, einen Antriebsgeschwindigkeits- bzw. Drehzahlsensor 19 zur Erfassung der Antriebsgeschwindigkeit bzw. Drehzahl des Förderrotors 13 des Beschickungsförderers 11, einen Drehmomentsensor 18 zur Erfassung des Antriebsmoments des Beschickungsförderers 11 beispielsweise in Form eines in dessen Hydraulikkreis geschalteten Drucksensors, sowie ferner einen Laderaumsensor 20 zur Erfassung des Füllstandes, der Ernteguthöhe und/oder des Rückstaudrucks des Ernteguts im Laderaum 5 vorzugsweise im Bereich oberhalb des Beschickungsförderers 11. Weiterhin könnte ggf. auch eine Sensorik 17 zur Bestimmung der Geometrie und/oder der Dichte des vor dem Schlepper liegenden und sodann vom Ladwagen 1 aufzunehmenden Erntegutschwads vorgesehen sein.

Anhand der diversen Sensoren bzw. der davon erfassten Betriebs- und Bearbeitungsparameter steuert die Steuervorrichtung 9 den Aufsammelförderer 10 und den Beschickungsförderer 11 jeweils individuell derart, dass der Ladevorgang optimiert und bei hoher Aufnahmeleistung eine optimale Rechqualität erreicht wird, ohne Einbußen in der Schnittqualität hinnehmen zu müssen. Dabei können sich verschiedene Steuerungs- bzw. Regelungsszenarien einstellen:
Wird beispielsweise aus der Fahrt des Ladewagens um einen optimalen Betriebspunkt herum die Fahrgeschwindigkeit des Ladewagens 1 erhöht, fährt die Steuervorrichtung 9 die Drehzahl der Stachelwalze 12 des Aufsammelförderers 10 nach oben, und zwar derart, dass einerseits kein Stau vor dem Aufsammelförderer 10 entsteht und andererseits ein Spritzen des Ernteguts von der Stachelwalze 12 weg vermieden wird. Andererseits erfasst die Steuervorrichtung 9 durch einen geeigneten Sensor das an der Pick-up 4 anliegende Schwadgewicht insbesondere durch Erfassung des am Aufsammelförderer 10 vorhandenen Antriebsmoments. Falls das Schwadgewicht und/oder das Antriebsmoment am Aufsammelförderer 10 geringer wird, senkt die Steuervorrichtung 9 die Antriebsgeschwindigkeit des Beschickungsförderers 11, um ein Abfallen der Schnittqualität zu verhindern. Falls andererseits das Schwadgewicht und/oder das Antriebsmoment am Aufsammelförderer 10 konstant bleibt, kann die Steuervorrichtung 9 die Antriebsgeschwindigkeit des Beschickungsförderers 11 konstant halten. Falls weiterhin das Schwadgewicht und/oder das Antriebsmoment am Aufsammelförderer 10 steigen sollte, fährt die Steuervorrichtung 9 die Antriebsgeschwindigkeit des Beschickungsförderers 11 nach oben, um die Schnittqualität zu erhalten.

Bei einem Erniedrigen der Fahrgeschwindigkeit aus einer Fahrt des Ladewagens um den optimalen Betriebspunkt herum ergibt sich die Steuerung durch die Steuervorrichtung 9 analog. Bei einem solchen Erniedrigen der Fahrgeschwindigkeit senkt die Steuervorrichtung 9 die Drehzahl der Stachelwalze 12, wobei die zuvor genannten Grenzen eingehalten werden, insbesondere die Drehgeschwindigkeit der Stachelwalze 12 ausreichend hoch gehalten wird, um einen Stau vor dem Aufsammelförderer 10 zu vermeiden. Je nachdem, wie sich dabei das Antriebsmoment am Aufsammelförderer 10 verändert, senkt, erhöht oder belässt die Steuervorrichtung 9 die Drehzahl des Beschickungsförderers 11.

Ergibt sich andererseits bei gleichbleibender Fahrgeschwindigkeit eine Absenkung des Antriebsmoments des Aufsammelförderers 10 durch einen dünner werdenden Erntegutschwad, kann die Steuervorrichtung 9 die Drehzahl des Beschickungsförderers 11 absenken, um die Größe der Futterpakete gleich zu halten und die Schnittqualität hoch zu halten. In analoger Weise kann bei einem Ansteigen des Antriebsmoments am Aufsammelförderer 10 durch einen dicker werdenden Erntegutschwad in der Folge die Antriebsgeschwindigkeit des Beschickungsförderers 11 entsprechend erhöht werden.

In einem erfindungsgemäßen Steuerungsmodus greift die Steuervorrichtung 9 auch in die Steuerung der Fahrgeschwindigkeit ein, entweder halbautomatisch durch Bereitstellen eines entsprechenden Fahrgeschwindigkeits-Sollwertsignals und Umsetzung durch einen Schlepperführer oder vollautomatisch durch Bereitstellen des genannten Fahrgeschwindigkeits-Sollwertsignals an einen Fahrgeschwindigkeitsregler. Dabei kann insbesondere das Fahrgeschwindigkeits-Sollwertsignal in Abhängigkeit des sich am Aufsammelförderer 10 einstellenden Antriebsmoments variabel gesteuert werden. Wird beispielsweise über den Drehmomentsensor 16 ein sinkendes Antriebsmoment am Aufsammelförderer 10 festgestellt, erhöht die Steuervorrichtung 9 das Fahrgeschwindigkeits-Sollwertsignal, um durch eine schnellere Fahrt den Erntegutvolumenstrom zu erhöhen und diesen im optimalen Durchsatz- bzw. Schwadgewichtfenster zu halten. Mit einer entsprechenden Fahrgeschwindigkeitserhöhung einhergehend kann die Steuervorrichtung 9 die Drehzahl der Stachelwalze 12 entsprechend erhöhen. Der Fahrgeschwindigkeits-Sollwert kann hierbei solange erhöht werden, bis eine vorgegebene Maximalgeschwindigkeit erreicht ist und/oder durch die damit einhergehende Stachelwalzen-Drehzahlerhöhung deren Spritzgeschwindigkeit erreicht wird. Umgekehrt kann bei einem Ansteigen des Antriebsmoments am Aufsammelförderer 10 das Fahrgeschwindigkeits-Sollwertsignal und dann in Abhängigkeit der Fahrgeschwindigkeit damit einhergehend die Drehzahl der Stachelwalze 12 abgesenkt werden, um das Schwadgewicht bzw. den Volumenstrom des Erntegutschwads in dem gewünschten Fenster zu halten.

Vorteilhafterweise kann die Steuervorrichtung 9 jeweils dann, wenn einer der zu steuernden Parameter an einen jeweiligen Grenzwert stößt bzw. nicht weiter verändert werden kann, einen jeweils anderen zu steuernden Parameter entsprechend verändern. Kann beispielsweise bei einem Absinken des Antriebsmoments des Aufsammelförderers 10 durch einen dünner werdenden Erntegutschwad die Fahrgeschwindigkeit nicht entsprechend erhöht werden, beispielsweise weil bei einer Bergauffahrt die Schlepperleistung an ihre Grenzen stößt, muss die Steuervorrichtung 9 ein Absinken des Schwadgewichts bzw. des Volumenstroms des Ernteguts zulassen und dadurch kompensieren, dass die Antriebsgeschwindigkeit des Beschickungsförderers 11 abgesenkt wird, wodurch wiederum die Schnittqualität hochgehalten wird. Die Steuervorrichtung 9 bildet somit ein sich selbst einstellendes System, welches die Eingangsparameter Fahrgeschwindigkeit, Förderrotorgeschwindigkeit, Stachelwalzendrehzahl sowie Stachelwalzendrehmoment und ggf. auch Beschickungsförderer-Moment sowie Beschickungsförderer-Drehzahl so verknüpft, dass die Ausgangsparameter Fahrgeschwindigkeit, Förderrotordrehzahl und Stachelwalzendrehzahl optimal im Hinblick auf Rechqualität und Schnittqualität gesteuert werden. Zudem wird durch diese Steuerung das Auftreten von Schoppern verhindert, indem durch Messung des Schwadgewichts bzw. durch Steuerung der optimalen Schnittqualität nur so viel Erntegut aufgenommen wird, dass es zu keiner Verstopfung kommt. Überdies kann eine bislang übliche Gelenkwellenabsicherung eingespart werden, da durch die kombinierte Steuerung sämtlicher Vorgänge keine Überlastung des Antriebsstranges auftreten kann.

## Patentansprüche

1. Erntemaschine, insbesondere Ladewagen (1), mit einer Aufnahmevorrichtung (3) zur Aufnahme von Erntegut, die einen Aufsammelförderer (10), vorzugsweise in Form einer anheb- und absenkbaren Pick-up (4) umfassend eine rotatorisch antreibbare Stachelwalze (12), zum Aufsammeln des Ernteguts vom Boden, sowie einen dem Aufsammelförderer (10) nachgeschalteten Beschickungsförderer (11), vorzugsweise in Form eines Förderrotors (13), zur Förderung des aufgesammelten Ernteguts durch einen Förderkanal in einen Erntegutraum (5) aufweist, sowie ferner mit Erfassungsmitteln (14, 15, 16, 17, 18, 19, 20) zur Erfassung von Betriebs- und/oder Bearbeitungsparametern sowie einer Steuervorrichtung (9) zur Ausgabe von Steuersignalen für die Erntemaschine, wobei der Aufsammelförderer (10) und der Beschickungsförderer (11) unabhängig voneinander durch die Steuervorrichtung (9) steuerbar sind derart, dass das Verhältnis der Aufsammelförderer-Antriebsgeschwindigkeit zur Beschickungsförderer-Antriebsgeschwindigkeit je nach Veränderung der erfassten Betriebs- und/oder Bearbeitungsparameter durch die Steuervorrichtung (9) variierbar ist, **dadurch gekennzeichnet, dass** von der Steuervorrichtung (9) ein Fahrgeschwindigkeits-Sollwertsignal in Abhängigkeit eines jeweils bestimmten Antriebsmoments des Aufsammelförderers variabel vorgebbar ist, wobei das Fahrgeschwindigkeits-Sollwertsignal von der Steuervorrichtung (9) derart geregelt wird, dass die Antriebsgeschwindigkeit und/oder das Antriebsmoment des Beschickungsförderers einen Sollwert erreicht.

2. Erntemaschine nach dem vorhergehenden Anspruch, wobei von der Steuervorrichtung (9) das Fahrgeschwindigkeits-Sollwertsignal in Abhängigkeit einer jeweiligen Antriebsgeschwindigkeit des Beschickungsförderers (11) variabel vorgebbar ist.

3. Erntemaschine nach einem der vorhergehenden Ansprüche, wobei das Fahrgeschwindigkeits-Sollwertsignal von der Steuervorrichtung (9) solange erhöht wird, bis die Antriebsgeschwindigkeit des Aufsammelförderers (10) und/oder das Antriebsmoment des Beschickungsförderers (11) einen jeweiligen Maximalwert erreicht.

4. Erntemaschine nach einem der beiden vorhergehenden Ansprüche, wobei das Fahrgeschwindigkeits-Sollwertsignal von der Steuervorrichtung (9) derart geregelt wird, dass das Antriebsmoment des Aufsammelförderers (10) einen Sollwert erreicht.

5. Erntemaschine nach einem der vorhergehenden Ansprüche, wobei die Steuervorrichtung (9) bei Unerreichbarkeit des vorgegebenen Fahrgeschwindigkeits-Sollwerts und/oder bei einsetzender Begrenzung des Fahrgeschwindigkeits-Sollwerts auf einen vorbestimmten Maximalwert die Steuervorrichtung (9) die Antriebsgeschwindigkeit des Beschickungsförderers (11) entsprechend dem tatsächlich bestimmten Antriebsmoment des Aufsammelförderers steuert.

6. Erntemaschine nach einem der vorhergehenden Ansprüche, wobei die Steuervorrichtung (9) die Antriebsgeschwindigkeit des Aufsammelförderers (10) in Abhängigkeit eines anderen Betriebs- und/oder Bearbeitungsparameters steuert als die Antriebsgeschwindigkeit des Beschickungsförderers (11).

7. Erntemaschine nach einem der vorhergehenden Ansprüche, wobei die Beschickungsförderer-Antriebsgeschwindigkeit von der Steuervorrichtung (9) in Abhängigkeit des jeweils bestimmten Antriebsmoments des Aufsammelförderers (10) variierbar ist.

8. Erntemaschine nach dem vorhergehenden Anspruch, wobei die Beschickungsförderer-Antriebsgeschwindigkeit von der Steuervorrichtung (9) bei Änderungen des Antriebsmoments des Aufsammelförderers (10) variiert wird derart, dass mit zunehmendem Antriebsmoment des Aufsammelförderers (10) die Antriebsgeschwindigkeit des Beschickungsförderers (11) erhöht wird und/oder mit sinkendem Antriebsmoment des Aufsammelförderers (10) die Antriebsgeschwindigkeit des Beschickungsförderers (11) gesenkt wird.

9. Erntemaschine nach einem der beiden vorhergehenden Ansprüche, wobei die Beschickungsförderer-Antriebsgeschwindigkeit von der Steuervorrichtung (9) in Abhängigkeit einer Füllhöhe, einer Ladehöhe und/oder eines Rückstaudrucks des Ernteguts im Erntegutraum (5) gesteuert ist.

10. Erntemaschine nach einem der vorhergehenden Ansprüche, wobei die Aufsammelförderer-Antriebsgeschwindigkeit von der Steuervorrichtung (9) in Abhängigkeit von einer Fahrgeschwindigkeit der Erntemaschine variierbar ist, insbesondere derart, dass mit zunehmender Fahrgeschwindigkeit die Aufsammelförderer-Antriebsgeschwindigkeit erhöht und/oder mit abnehmender Fahrgeschwindigkeit die Aufsammelförderer-Antriebsgeschwindigkeit abgesenkt wird.

11. Erntemaschine nach dem vorhergehenden Anspruch, wobei die Aufsammelförderer-Antriebsgeschwindigkeit von der Steuervorrichtung (9) nur innerhalb bestimmter Grenzen variiert wird derart, dass die Aufsammelförderer-Antriebsgeschwindigkeit stets kleiner als eine vorgegebene Maximalgeschwindigkeit und stets größer als eine fahrgeschwindigkeitsabhängige Minimalgeschwindigkeit ist.

12. Erntemaschine nach einem der vorhergehenden Ansprüche, wobei sie frei von mechanischen Gelenkwellen-Überlastsicherungen, wie Gelenkwellen-Rutschkupplungen und dergleichen, ausgebildet ist.

## Claims

1. Harvesting machine, in particular loading wagon (1), with a receiving device (3) for receiving harvested material, which comprises a pickup conveyor (10), preferably in the form of a liftable and lowerable pick-up (4), including a rotatively-drivable spiked roller (12) to collect the harvested material from the ground, as well as a feed conveyor (11) downstream of the pickup conveyor (10), preferably in the form of a conveying rotor (13), to convey the picked-up harvested material, through a conveying channel, into a harvested material space (5), as well as moreover with detection means (14, 15, 16, 17, 18, 19, 20) to detect operating and/or processing parameters, as well as a control device (9) to output control signals for the harvesting machine, wherein the pickup conveyor (10) and the feed conveyor (11) are controllable independently of one another through the control device (9) in such a manner that the ratio of pickup conveyor drive speed to the feed conveyor drive speed is varied, depending on alteration of the detected operating and/or processing parameters, through the control device (9), **characterized in that** a traveling speed target value signal can be variably specified by the control device (9) depending on a respectively established drive torque of the pickup conveyor, wherein the traveling speed target value signal is regulated by the control device (9) in such a manner that the drive speed and/or the drive torque of the feed conveyor reaches a target value.

2. Harvesting machine according to the preceding claim, wherein the travel speed target value signal can be variably set by the control device (9) dependent upon a respective drive speed of the feed conveyor (11).

3. Harvesting machine according to one of the preceding claims, wherein the traveling speed target value signal is increased by the control device (9) for as long as until the drive speed of the pickup conveyor (10) and/or the drive torque of the feed conveyor (11) reaches a respective maximum value.

4. Harvesting machine according to any one of the two preceding claims, wherein the traveling speed target value signal is regulated by the control device (9) in such a manner that the drive torque of the pickup conveyor (10) reaches a target value.

5. Harvesting machine according to one of the preceding claims, wherein the control device (9), in case the specified traveling speed target value cannot be reached and/or in case of incipient limitation of the traveling speed target value to a predefined maximum value, the control device (9) controls the drive speed of the feed conveyor (11) according to the actually established drive torque of the pickup conveyor.

6. Harvesting machine according to one of the preceding claims, wherein the control device (9) controls the drive speed of the pickup conveyor (10) dependent upon an operating and/or processing parameter different from the drive speed of the feed conveyor (11).

7. Harvesting machine according to one of the preceding claims, wherein the feed conveyor drive speed is variable by the control device (9) depending on the respectively established drive torque of the pickup conveyor (10).

8. Harvesting machine according to the preceding claim, wherein the feed conveyor drive speed is varied by the control device (9) upon alterations of the drive torque of the pickup conveyor (10) in such a manner that, with increasing drive torque of the pickup conveyor (10), the drive speed of the feed conveyor (11) is increased, and/or, with decreasing drive torque of the pickup conveyor (10), the drive speed of the feed conveyor (11) is decreased

9. Harvesting machine according to one of the two preceding claims, wherein the feed conveyor drive speed is controlled by the control device (9) depending on a filling height, a loading height and/or a backpressure of the harvested material in the harvested material space (5).

10. Harvesting machine according to one of the preceding claims, wherein the pickup conveyor drive speed can be varied by the control device (9) depending upon a traveling speed of the harvesting machine, in particular in such a manner that, with increasing traveling speed, the pickup conveyor drive speed is increased and/or, with decreasing traveling speed, the pickup conveyor drive speed is decreased.

11. Harvesting machine according to the preceding claim, wherein the pickup conveyor drive speed is only varied by the control device within certain limits in such a manner that the pickup conveyor drive speed is always smaller than a predetermined maximum speed and is always greater than a traveling speed dependent minimum speed.

12. Harvesting machine according to one of the preceding claims, wherein it is configured free of mechanical articulated shaft overload protection means, such as articulated shaft slipping clutches or the like.

## Revendications

1. Machine de récolte, en particulier chariot chargeur (1), avec un dispositif de réception (3) servant à recevoir du produit de récolte, qui présente un convoyeur de ramassage (10), de préférence sous la forme d'un pick-up (4) pouvant être relevé et abaissé, comprenant un cylindre à dents (12) pouvant être entraîné en rotation, servant à ramasser du sol du produit de récolte, ainsi qu'un convoyeur de chargement (11) installé en aval du convoyeur de ramassage (10), de préférence sous la forme d'un rotor convoyeur (13), servant à convoyer le produit de récolte ramassé à travers un canal de convoyage dans un espace pour produit de récolte (5), et en outre avec des moyens de détection (14, 15, 16, 17, 18, 19, 20) servant à détecter des paramètres de fonctionnement et/ou d'usinage ainsi qu'un dispositif de commande (9) servant à envoyer des signaux de commande pour la machine de récolte, dans laquelle le convoyeur de ramassage (10) et le convoyeur de chargement (11) peuvent être commandés indépendamment l'un de l'autre par le dispositif de commande (9) de telle manière que le rapport entre la vitesse d'entraînement de convoyeur de ramassage et la vitesse d'entraînement de convoyeur de chargement peut être varié selon la modification des paramètres de fonctionnement et/ou d'usinage détectés par le dispositif de commande (9), **caractérisée en ce qu'**un signal de valeur théorique de vitesse de déplacement peut être spécifié de manière variable en fonction d'un couple d'entraînement respectivement défini du convoyeur de ramassage par le dispositif de commande (9), dans lequel le signal de valeur théorique de vitesse de déplacement est régulé par le dispositif de commande (9) de telle manière que la vitesse d'entraînement et/ou le couple d'entraînement du convoyeur de chargement atteignent une valeur théorique.

2. Machine de récolte selon la revendication précédente, dans laquelle le signal de valeur théorique de vitesse de déplacement peut être spécifié de manière variable en fonction d'une vitesse d'entraînement respective du convoyeur de chargement (11) par le dispositif de commande (9).

3. Machine de récolte selon l'une quelconque des revendications précédentes, dans laquelle le signal de valeur théorique de vitesse de déplacement est augmenté par le dispositif de commande (9) jusqu'à ce que la vitesse d'entraînement du convoyeur de ramassage (10) et/ou le couple d'entraînement du convoyeur de chargement (11) atteignent une valeur maximale respective.

4. Machine de récolte selon l'une quelconque des deux revendications précédentes, dans laquelle le signal de valeur théorique de vitesse de déplacement est régulé par le dispositif de commande (9) de telle manière que le couple d'entraînement du convoyeur de ramassage (10) atteint une valeur théorique.

5. Machine de récolte selon l'une quelconque des revendications précédentes, dans laquelle le dispositif de commande (9) commande lorsque la valeur théorique de vitesse de déplacement spécifiée est inatteignable et/ou lorsque la valeur théorique de vitesse de déplacement commence à être limitée sur une valeur maximale prédéfinie, la vitesse d'entraînement du convoyeur de chargement (11) conformément au couple d'entraînement réellement défini du convoyeur de ramassage.

6. Machine de récolte selon l'une quelconque des revendications précédentes, dans laquelle le dispositif de commande (9) commande la vitesse d'entraînement du convoyeur de ramassage (10) en fonction d'un paramètre de fonctionnement et/ou d'usinage autre que la vitesse d'entraînement du convoyeur de chargement (11).

7. Machine de récolte selon l'une quelconque des revendications précédentes, dans laquelle la vitesse d'entraînement de convoyeur de chargement peut être variée par le dispositif de commande (9) en fonction du couple d'entraînement respectivement défini du convoyeur de ramassage (10).

8. Machine de récolte selon la revendication précédente, dans laquelle la vitesse d'entraînement de convoyeur de chargement est variée par le dispositif de commande (9) en cas de modifications du couple d'entraînement du convoyeur de ramassage (10) de telle manière que la vitesse d'entraînement du convoyeur de chargement (11) est augmentée au fur et à mesure que le couple d'entraînement du convoyeur de ramassage (10) augmente et/ou la vitesse d'entraînement du convoyeur de chargement (11) est baissée au fur et à mesure que le couple d'entraînement du convoyeur de ramassage (10) baisse.

9. Machine de récolte selon l'une quelconque des deux revendications précédentes, dans laquelle la vitesse d'entraînement de convoyeur de chargement est commandée par le dispositif de commande (9) en fonction d'un niveau de remplissage, d'un niveau de chargement et/ou d'une pression de refoulement du produit de récolte dans l'espace pour produit de récolte (5).

10. Machine de récolte selon l'une quelconque des revendications précédentes, dans laquelle la vitesse d'entraînement de convoyeur de ramassage peut être variée par le dispositif de commande (9) en fonction d'une vitesse de déplacement de la machine de récolte, en particulier de telle manière que la vitesse d'entraînement de convoyeur de ramassage est élevée au fur et à mesure que la vitesse de déplacement augmente et/ou la vitesse d'entraînement de convoyeur de ramassage est abaissée au fur et à mesure que la vitesse de déplacement baisse.

11. Machine de récolte selon la revendication précédente, dans laquelle la vitesse d'entraînement de convoyeur de ramassage est variée par le dispositif de commande (9) seulement dans des limites définies de telle manière que la vitesse d'entraînement de convoyeur de ramassage est systématiquement inférieure à une vitesse maximale spécifiée et est systématiquement supérieure à une vitesse minimale dépendant de la vitesse de déplacement.

12. Machine de récolte selon l'une quelconque des revendications précédentes, dans laquelle elle est réalisée sans systèmes de sécurité contre les surcharges d'arbres d'articulation mécaniques, tels que des accouplements à glissement d'arbres d'articulation et similaires.
